# EUROPEAN PATENT APPLICATION

(11) **EP 2 166 475 A1**
(43) Date of publication of application: **24.03.2010**
(21) Application number: 09164102.7
(22) Date of filing: 30.06.2009
(51) Int. Cl.: G06F 21/00

(54) **Function activating apparatus and function activating method**

(30) Priority: 05.09.2008 JP 2008228984
(71) Applicant: Fujitsu Limited, Kawasaki-shi, Kanagawa 211-8588 (JP)
(72) Inventor: Abe, Narishige, Kawasaki-shi Kanagawa 211-8588 (JP)
(74) Representative: HOFFMANN EITLE

(57) **Abstract**

A function, activating apparatus includes a correspondence storage unit, an operation detecting unit (140), a feature-amount calculating unit (150), an encoded-information generating unit (160), a function retrieving unit (170), and a function activating unit (190). The correspondence storage unit stores a correspondence between encoded information and a function to be activated in response to input of biometric information formed of time-series image data. The operation detecting unit (140) detects, from the time-series image data, at least one of the moving direction and acceleration of the input operation of the biometric information. The feature-amount calculating unit (150) calculates the feature amount of at least one of the moving direction and acceleration. The encoded-information generating unit (160) assigns a predetermined code to the feature amount. The function retrieving unit (170) retrieves from the correspondence storage unit a function associated with the encoded information. The function activating unit (190) activates the function.

## Description

### FIELD

The embodiments discussed herein is directed to a function activating apparatus and a function activating method.

### BACKGROUND

There have been technologies in which when biometric information read by a biometric-information reading apparatus, such as a fingerprint sensor or vein sensor, is successfully authenticated, a function (various functions such as mailer and browser) associated in advance with the biometric information is activated.

For example, Japanese Laid-open Patent Publication No. 2007-304646 discloses a conventional technology for switching functions to be activated according to a trail made by a user's finger when a fingerprint image is input by the user.

Besides, for the purpose of accurately inputting a fingerprint image, a sweep-type fingerprint sensor set with an aid (guide) for encouraging an input of an appropriate fingerprint image has been widely distributed.

Meanwhile, for example, when the above conventional technology is applied to the sweep-type fingerprint sensor, the aid constitutes a hindrance, which causes the user's fingerprint input operation to be unnatural. This degrades the performance of authenticating a fingerprint image.

Moreover, in the sweep-type fingerprint sensor mentioned above, for a smooth fingerprint input operation without the aid being taken as a hindrance, the moving direction of the operation is restricted. Accordingly, it is difficult to expand the number of functions to be activated in association with the trail of the input fingerprint image.

### SUMMARY

According to an aspect of an embodiment, a function activating apparatus includes a correspondence storage unit, an operation detecting unit, a feature-amount calculating unit, an encoded-information generating unit, a function retrieving unit, and a function activating unit. The correspondence storage unit stores a correspondence between encoded information and a function to be activated in response to input of biometric information formed of time-series image data. The encoded information is obtained by encoding a feature amount of at least one of a moving direction and acceleration of input operation of biometric information. The operation detecting unit detects, from the time-series image data input with the input operation of the biometric information, at least one of the moving direction and acceleration of the input operation of the biometric information. The feature-amount calculating unit calculates the feature amount of at least one of the moving direction and acceleration detected by the operation detecting unit. The encoded-information generating unit assigns a predetermined code to the feature amount calculated by the feature-amount calculating unit to generate the encoded information. The function retrieving unit retrieves from the correspondence storage unit a function associated with the encoded information generated by the encoded-information generating unit. The function activating unit activates the function retrieved by the function retrieving unit.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWING(S)

FIG. 1 is an example diagram for explaining a function activating apparatus according to a first embodiment;
FIG. 2 is an example diagram of a sweep-type fingerprint sensor according to the first embodiment;
FIG. 3 is a configuration of the function activating apparatus according to the first embodiment;
FIG. 4 is a structure of an encoded-information generation table according to the first embodiment;
FIG. 5 is a structure of an encoded information/function correspondence table according to the first embodiment;
FIG. 6 is an example diagram for explaining the operation of an operation detecting unit according to the first embodiment,;
FIG. 7 is an example diagram of the detection result of the operation detecting unit according to the first embodiment;
FIG. 8 is an example diagram for explaining the operation of a feature-amount calculating unit according to the first embodiment;
FIG. 9 is an example diagram for explaining the operation of the feature-amount calculating unit according to the first embodiment;
FIG. 10 is a flowchart of the operation of the function activating apparatus according to the first embodiment;
FIG. 11 is a configuration of a function activating apparatus according to a second embodiment;
FIG. 12 is a structure of a body-part type/encoded information/function correspondence table according to the second embodiment;
FIG. 13 is a configuration of a function activating apparatus according to a third embodiment;
FIG. 14 is a structure of an encoded information/in-function operation details correspondence table according to the third embodiment; and
FIG. 15 is an example diagram of a computer executing a function activating program.

### DESCRIPTION OF EMBODIMENT(S)

Exemplary embodiments of the invention will be explained with reference to the accompanying drawings.

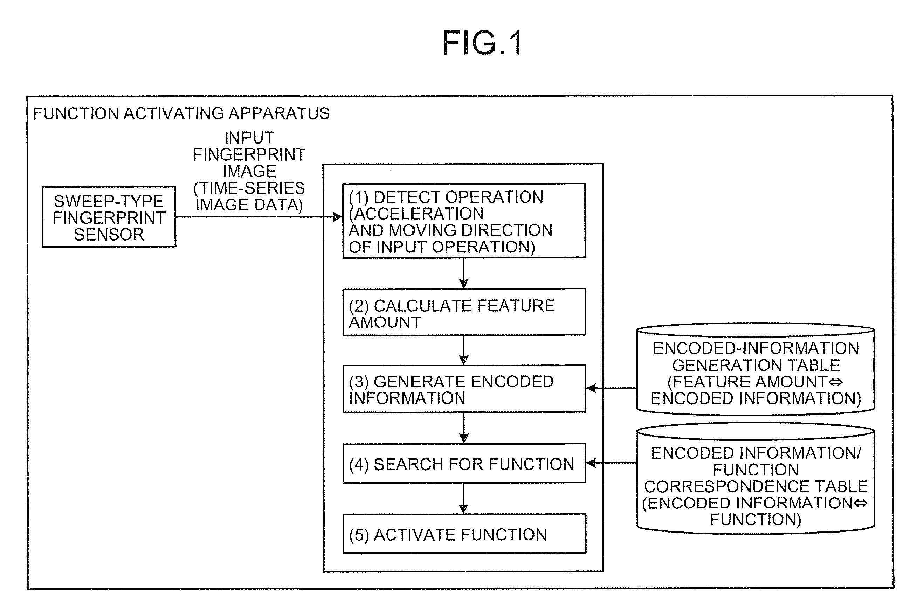

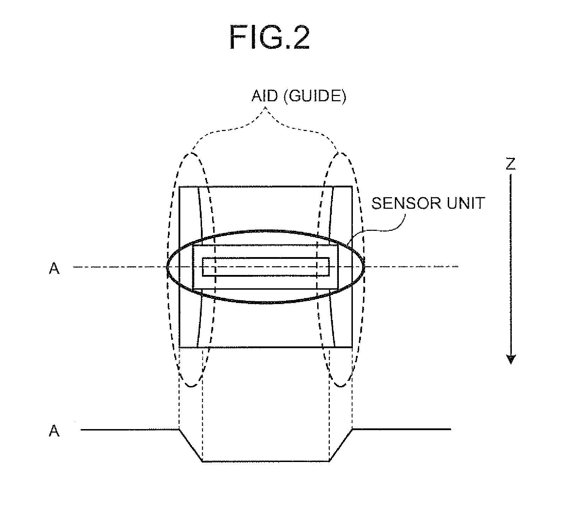

First, a general outline of the function activating apparatus is explained with reference to FIGS. 1 and 2. FIG. 1 is a diagram for explaining a function activating apparatus according to a first embodiment. FIG. 2 is a diagram of a sweep-type fingerprint sensor according to the first embodiment.

In short, if fingerprint information formed of time-series image data input from a user has been successfully authenticated, the function activating apparatus of the first embodiment activates a function associated in advance to the successfully-authenticated fingerprint information. The function activating apparatus can also expand the number of functions to be activated in association with input biometric information while keeping the authentication performance.

Specifically, as depicted in FIG. 1, the function activating apparatus includes an encoded-information generation table having stored therein a correspondence between a predetermined threshold range and encoded information, the predetermined threshold range for converting a feature amount calculated for either one or both of a moving direction and acceleration of a user's fingerprint input operation to encoded information.

The function activating apparatus further includes an encoded information/function correspondence table that stores therein correspondence between encoded information obtained by encoding a feature amount of a fingerprint input operation and functions to be activated according to an input of a fingerprint image. That is, for each different feature amount depending on the moving direction and acceleration of the fingerprint input operation, various functions to be activated according to an input of a fingerprint image are associated.

Furthermore, the function activating apparatus performs an operation detection of detecting either one or both of a moving direction and acceleration of an input operation at the time of a user's fingerprint input operation in a fingerprint image (time-series image data) input by the user via a sweep-type fingerprint sensor (see (1) in FIG. 1). Here, the sweep-type fingerprint sensor is provided with, for example, as depicted in FIG. 2, an aid for assisting the user's fingerprint input operation. Also, for example, with the user sliding his or her finger in a Z direction in FIG. 2, the sweep-type fingerprint sensor obtains a fingerprint image via a sensor unit provided at the center.

The function activating apparatus calculates a feature amount of either one or both of the moving direction and acceleration detected in (1) (see (2) in FIG. 1). After calculating the feature amount, the function activating apparatus refers to the encoded-information generation table to generate encoded information from the feature amount calculated in (2) (see (3) in FIG. 1). After generating the encoded information, the function activating apparatus refers to the encoded information/function correspondence table to retrieve a function associated with the encoded information generated in (3) (see (4) in FIG. 1).

If the search for a function associated with the encoded information generated in (3) has been successful, the function activating apparatus activates the retrieved function if authentication of the fingerprint image concurrently performed with the processes (1) to (4) has been successful (see (5) in FIG. 1).

In this manner, when a sweep-type fingerprint sensor is adopted, the function activating apparatus of the first embodiment can expand the number of functions in association with input biometric information (fingerprint image formed of time-series image data) while keeping the authentication performance.

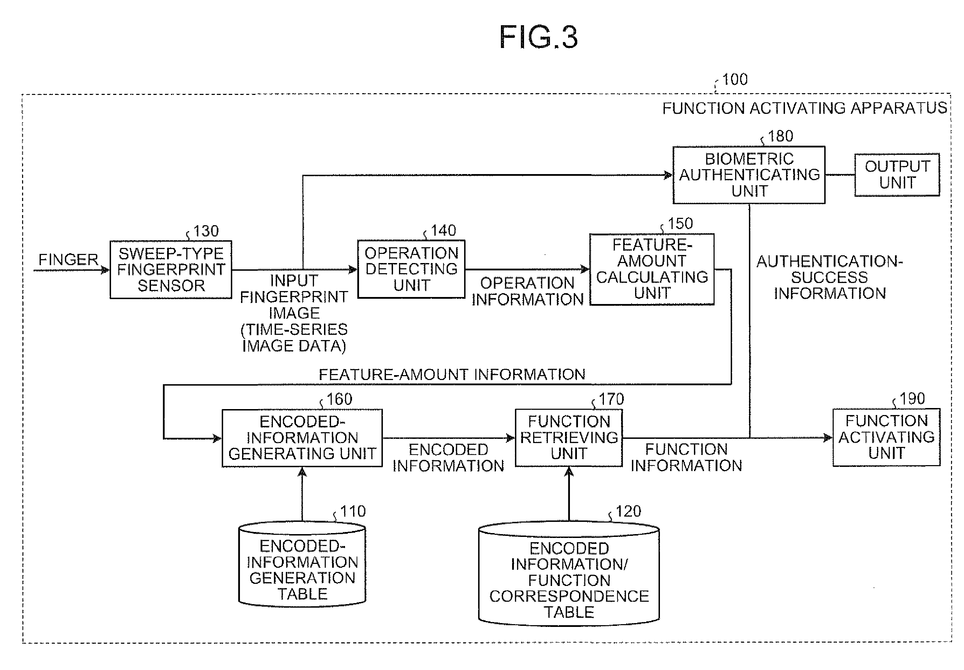

Next, the configuration of the function activating apparatus of the first embodiment is explained with reference to FIGS. 3 to 9. FIG. 3 illustrates the configuration of a function activating apparatus 100 according to the first embodiment.

As depicted in FIG. 3, the function activating apparatus 100 includes an encoded-information generation table 110 and an encoded information/function correspondence table 120. The function activating apparatus 100 further includes a sweep-type fingerprint sensor 130, an operation detecting unit 140, a feature-amount calculating unit 150, an encoded-information generating unit 160, a function retrieving unit 170, a biometric authenticating unit 180, and a function activating unit 190.

The encoded-information generation table 110 stores therein correspondence between a predetermined threshold range and encoded information, the predetermined threshold range for converting a feature amount calculated for either one or both of the moving direction and acceleration of a user's fingerprint input operation to encoded information.

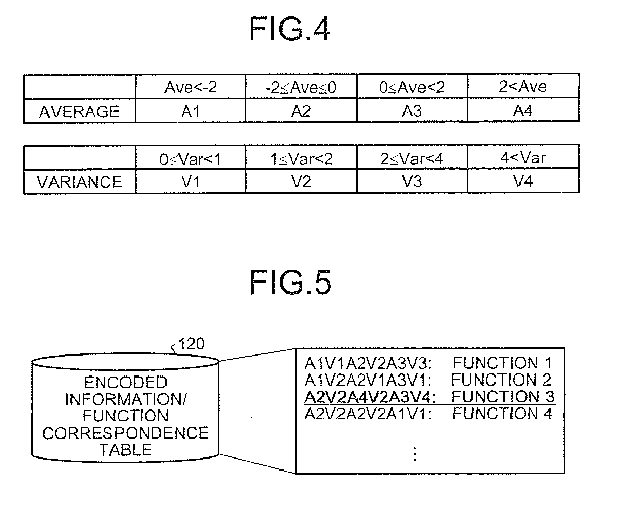

Specifically, as depicted in FIG. 4, the encoded-information generation table 110 stores therein correspondence between a predetermined threshold range and encoded information, the predetermined threshold range for converting an average value or variance value calculated as a feature amount regarding either one or both of the moving direction and acceleration of the fingerprint input operation. For example, when the average value of acceleration is within a range smaller than -2, the corresponding encoded information is "A1"; when the variance value of acceleration is within a range equal to or greater than 0 and smaller than 1, the corresponding encoded information is "V1". FIG. 4 illustrates an example of the structure of the encoded-information generation table according to the first embodiment.

The encoded information/function correspondence table 120 stores therein, specifically as depicted in FIG. 5, correspondence between encoded information obtained by encoding a feature amount regarding either one or both of the moving direction and acceleration of the fingerprint input operation and a function to be activated according to an input of a fingerprint image.

For example, as depicted in FIG. 5, the encoded information/function correspondence table 120 stores therein correspondence between "A2V2A4V2A3V4" obtained by encoding a feature amount regarding either one or both of the moving direction and acceleration of the fingerprint input operation and "function 3" to be activated according to an input of a fingerprint image. Also, as the function to be activated according to an input of a fingerprint image, a general function provided to a computer is assumed, such as a mailer, browser, or scratch pad. FIG. 5 illustrates an example of the structure of the encoded information/function correspondence table according to the first embodiment.

With the fingerprint image input from the user being analyzed by the function activating apparatus 100, the information stored in the encoded-information generation table 110 and the encoded information/function correspondence table 120 is registered in advance in a consistency-kept state.

The sweep-type fingerprint sensor 130 obtains a fingerprint image formed of time-series image data according to the fingerprint input operation of the user. For example, as depicted in FIG. 2, an aid is provided to assist the fingerprint input operation of the user. Also, with the user sliding his or her finger in a Z direction depicted in FIG. 2, a fingerprint image formed of time-series image data intermittently input via a sensor unit provided at the center is obtained. The sweep-type fingerprint sensor 130 outputs the input fingerprint image to the operation detecting unit 140 and the biometric authenticating unit 180, which will be explained further below.

It is assumed herein that the user is required to perform a smooth fingerprint input operation so that the aid of the sweep-type fingerprint sensor 130 is not taken as a hindrance.

The operation detecting unit 140 performs an operation detection of detecting either one or both of a moving direction and acceleration of the input operation at the time of a fingerprint input operation of the user in the fingerprint image (time-series image data) obtained from the sweep-type fingerprint sensor 130.

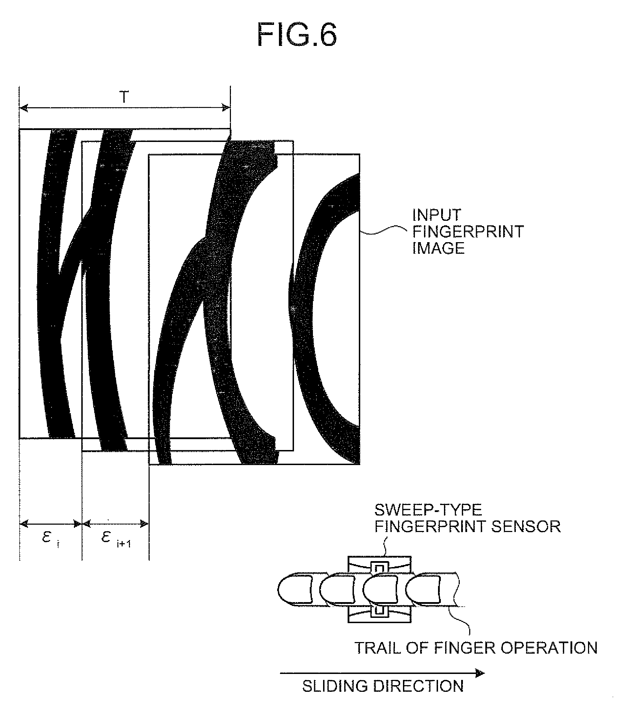

Specifically, as depicted in FIG. 6, the operation detecting unit 140 superposes pieces of time-series image data at a position where a correlation value among the time-series image data forming the fingerprint image obtained from the sweep-type fingerprint sensor 130 is the highest, thereby calculating an instantaneous velocity (slice velocity) of the fingerprint input operation. For example, it is assumed that a period from the time when an i-th piece of time-series image data is obtained until the time when an (i+1)-th piece of time-series image data is obtained is taken as T, and an average number of pixels traveled when a correlation value between the i-th piece of time-series image data and the (i+1) piece of time-series image data is at maximum is taken as εᵢ. In this case, an instantaneous velocity (slice velocity) Vᵢ of the fingerprint input operation from the time when the i-th piece of time-series image data is obtained until the time when the (i+1)-th piece of time-series image data is obtained is Vᵢ=εᵢ/T.

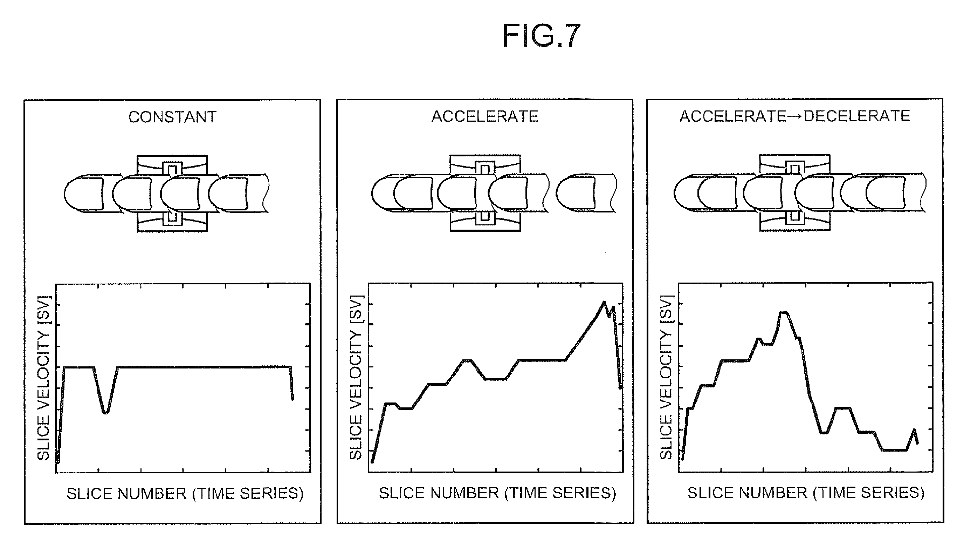

In this manner, the operation detecting unit 140 calculates an instantaneous velocity between pieces of time-series image data obtained until the user's fingerprint input operation is completed. With this, for example, as depicted in FIG. 7, the acceleration of the input operation at the time of the user's fingerprint input operation is detected, such as constant, acceleration, and acceleration to deceleration. Also, for example, the operation detecting unit 140 analyzes the fingerprint shape of the obtained fingerprint image in time series to detect the moving direction of the input operation at the time of the user's fingerprint input operation. The operation detecting unit 140 outputs operation information formed of the moving direction and acceleration of the input operation at the time of the user's fingerprint input operation to the feature-amount calculating unit 150. FIG. 6 is a diagram for explaining the operation of the operation detecting unit according to the first embodiment. FIG. 7 illustrates the detection result of the operation detecting unit according to the first embodiment.

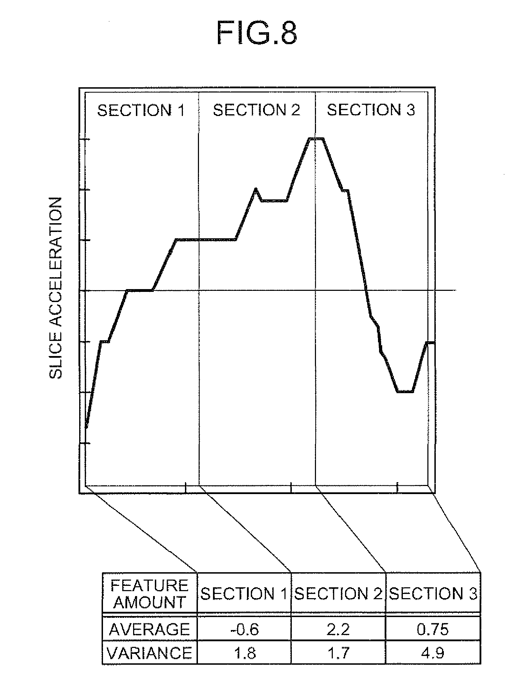

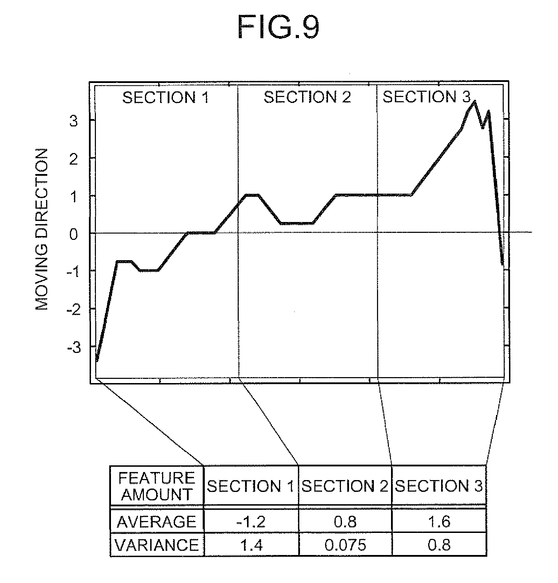

The feature-amount calculating unit 150 calculates a feature amount of the moving direction and acceleration received as operation information from the operation detecting unit 140. Specifically, as depicted in FIG. 8 or 9, the feature-amount calculating unit 150 divides the moving direction and acceleration received from the operation detecting unit 140 into constant sections. The operation detecting unit 140 then calculates an average value and variance value of the acceleration and moving direction as a feature amount for each section obtained through division.

For example, the case of calculating the feature amount of the acceleration received from the operation detecting unit 140 is explained. As depicted in FIG. 8, the feature-amount calculating unit 150 divides the acceleration of the fingerprint input operation received from the operation detecting unit 140 into sections 1 to 3. The feature-amount calculating unit 150 then calculates an average value of "-0.6" and a variance value of "1.8" of accelerations in the section 1, an average value of "2.2" and a variance value of "1.7" of accelerations in the section 2, and an average value of "0.75" and a variance value of "4.9" of accelerations in the section 3. The number of sections obtained through division can be changed as appropriate. By increasing the number of sections, the feature amount can be calculated in more detail from the operation information received from the operation detecting unit 140. FIGS. 8 and 9 are diagrams for explaining the operation of the feature-amount calculating unit according to the first embodiment.

The feature-amount calculating unit 150 outputs the feature amount (average value and variance value) for the acceleration and moving direction received from the operation detecting unit 140 to the encoded-information generating unit 160. The feature-amount calculating unit 150 may calculate not only the average value and variance value but also a differential average for acceleration and moving direction and a maximum power spectrum obtained by performing frequency analysis on the acceleration and moving direction individually or together with the feature amount.

The encoded-information generating unit 160 generates encoded information from the feature amount of the acceleration and moving direction received from the feature-amount calculating unit 150. Specifically, the encoded-information generating unit 160 refers to the encoded-information generation table 110 to convert the feature amount regarding the acceleration and moving direction for each constant section received from the feature-amount calculating unit 150 to a code. The encoded-information generating unit 160 then combines the codes obtained through conversion, thereby generating encoded information representing the acceleration and moving direction of the user's fingerprint input operation.

For example, the case of generating encoded information from the feature amount of the acceleration received from the feature-amount calculating unit 150 is explained. The encoded-information generating unit 160 refers to the encoded-information generation table 110 (FIG. 4) to convert the average value of "-0.6" and the variance value of "1.8" in the section 1 to a code "A2" and a code "V2", respectively. Similarly, the average value of "2.2" and the variance value of "1.7" in the section 2 are converted to a code "A4" and a code "V2", respectively. Furthermore, the average value of "0.75" and the variance value of "4.9" in the section 3 are converted to a code "A3" and a code "V4", respectively. The encoded-information generating unit 160 then combines the codes "A2" and "V2", "A4" and "V2", and "A3" and "V4" obtained through conversion to generate encoded information "A2V2A4V2A3V4" representing the feature amount of the acceleration. The encoded-information generating unit 160 then outputs the generated encoded information to the function retrieving unit 170.

The function retrieving unit 170 then refers to the encoded information/function correspondence table 120 (FIG. 5) to retrieve a function associated with the encoded information received from the encoded-information generating unit 160.

Specifically, the function retrieving unit 170 refers to the encoded information/function correspondence table 120 (FIG. 5) to retrieve a function associated with the encoded information "A2V2A4V2A3V4" received from the encoded-information generating unit 160. If the search for a function associated with the encoded information (for example, "A2V2A4V2A3V4") has been successful (for example, if "function 3" has been retrieved), the function retrieving unit 170 outputs the "function 3" to the function activating unit 190. On the other hand, if the search for a function associated with the encoded information (for example, "A2V2A4V2A3V4") has failed, the process ends.

Concurrently with the process performed by the operation detecting unit 140 to the function retrieving unit 170, the biometric authenticating unit 180 performs authentication of the fingerprint image (time-series image data) obtained from the sweep-type fingerprint sensor 130. If authentication of the fingerprint image has been successful, the biometric authenticating unit 180 notifies the user of the authentication success via an output unit, and also outputs authentication-success information indicating that authentication has been successful to the function activating unit 190. On the other hand, if authentication of the fingerprint image has failed, the biometric authenticating unit 180 notifies the user of the authentication failure via the output unit, and the process ends.

If the fingerprint image has been successfully authenticated by the biometric authenticating unit 180, the function activating unit 190 activates the function received from the function retrieving unit 170. Specifically, upon receipt of the function from the function retrieving unit 170, the function activating unit 190 determines whether authentication-success information has been received from the biometric authenticating unit 180. When it is determined that authentication-success information has been received, the function activating unit 190 activates the function received from the function retrieving unit 170 (for example, function 3). On the other hand, if authentication-success information has not been received, the process ends without activating the function received from the function retrieving unit 170.

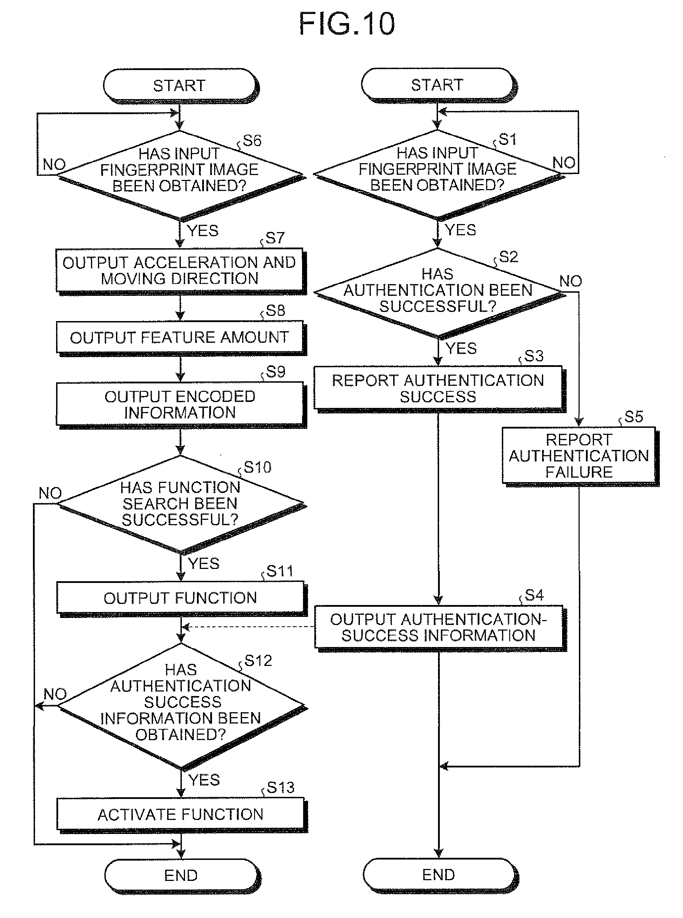

Next, the operation of the function activating apparatus according to the first embodiment is explained with reference to FIG. 10. FIG. 10 is a flowchart of the operation of the function activating apparatus according to the first embodiment.

As depicted in FIG. 10, when a fingerprint image (time-series image data) is obtained from the sweep-type fingerprint sensor 130 (Yes at Step S1), the biometric authenticating unit 180 performs authentication of the obtained fingerprint image (Step S2).

If the fingerprint image has been successfully authenticated (Yes at Step S2), the biometric authenticating unit 180 notifies the user of authentication success via the output unit (Step S3), and also outputs authentication-success information indicating that authentication has been successful to the function activating unit 190, thereby ending the process (Step S4). On the other hand, if authentication of the fingerprint image has failed (No at Step S2), the biometric authenticating unit 180 notifies the user of authentication failure via the output unit to end the process (Step S5).

Also, concurrently with the process (Steps S1 to S5) by the biometric authenticating unit 180, the following process is performed with the obtainment of the fingerprint image (time-series image data) from the sweep-type fingerprint sensor as a trigger. That is, when the fingerprint image (time-series image data) is obtained from the sweep-type fingerprint sensor 130, the operation detecting unit 140 detects either one or both of the moving direction and acceleration of the input operation at the time of the user's fingerprint input operation for output to the feature-amount calculating unit 150 (Step S7).

Specifically, as depicted in FIG. 6, the operation detecting unit 140 superposes pieces of time-series image data at a position where a correlation value among the time-series image data forming the fingerprint image obtained from the sweep-type fingerprint sensor 130 is the highest, thereby calculating an instantaneous velocity (slice velocity) of the fingerprint input operation (see FIG. 6). The operation detecting unit 140 then detects the acceleration of the input operation at the time of the user's fingerprint input operation (see FIG. 7). Also, for example, the operation detecting unit 140 analyzes the fingerprint shape of the obtained fingerprint image in time series to detect the moving direction of the input operation at the time of the user's fingerprint input operation.

The feature-amount calculating unit 150 calculates a feature amount of the moving direction and acceleration received as operation information from the operation detecting unit 140 for output to the encoded-information generating unit 160 (Step S8). Specifically, the feature-amount calculating unit 150 divides the moving direction and acceleration received from the operation detecting unit 140 for each constant section, and calculates an average value and variance value of the acceleration and moving direction for each section obtained through division as a feature amount (see FIGS. 8 and 9).

The encoded-information generating unit 160 generates encoded information from the feature amount of the acceleration and moving direction received from the feature-amount calculating unit 150 for output to the function retrieving unit 170 (Step S9). Specifically, the encoded-information generating unit 160 refers to the encoded-information generation table 110 to convert the feature amount regarding the acceleration and moving direction for each constant section (each of the sections 1 to 3) received from the feature-amount calculating unit 150 to a code. The encoded-information generating unit 160 then combines the codes obtained through conversion to generate encoded information representing the acceleration and moving direction of the user's fingerprint input operation.

The function retrieving unit 170 refers to the encoded information/function correspondence table 120 (FIG. 5) to retrieve a function associated with the encoded information received from the encoded-information generating unit 160 (Step S10). If the search for a function associated with the encoded information has been successful (Yes at Step S10), the function retrieving unit 170 outputs the function to the function activating unit 190 (Step S11). On the other hand, if the search for a function associated with the encoded information has failed (No at Step S10), the process ends.

Upon receipt of the function from the function retrieving unit 170, the function activating unit 190 determines whether authentication-success information has been received from the biometric authenticating unit 180 (Step S12). If authentication-success information has been received (Yes at Step S12), the function activating unit 190 activates the function received from the function retrieving unit 170, and then the process ends. On the other hand, if authentication-success information has not been received (No at Step S12), the process ends without activating the function received from the function retrieving unit 170.

In the foregoing, the case is explained in which the function activating apparatus 100 concurrently performs the process of the biometric authenticating unit 180 (Steps S1 to S5) and the process from the operation detecting unit 140 to the function retrieving unit 170 (Steps S6 to S10) according to the obtainment of the input fingerprint image. However, it is not so limited. Alternatively, these processes can be serially performed in a manner such that the process from the operation detecting unit 140 to the function retrieving unit 170 is performed after the process of the biometric authenticating unit 180.

As described above, according to the first embodiment, when a sweep-type fingerprint sensor is adopted, a smooth fingerprint input operation is allowed to be performed without the aid of the sweep-type fingerprint sensor 130 being taken as a hindrance, thereby keeping the authentication performance. Furthermore, while such a smooth fingerprint input operation is performed, a difference in sliding finger's velocity and moving direction at the time of the fingerprint input operation is calculated as a feature amount to activate a function associated for each calculated feature amount. Thus, the number of functions to be activated in association with input biometric information (fingerprint image formed of time-series image data) can be expanded.

Moreover, according to the first embodiment, either one or both of the moving direction and acceleration of the input operation is detected in the time-series image data superposed at a position where a correlation value among the time-series image data forming the fingerprint image obtained from the sweep-type fingerprint sensor 130 is the highest. Thus, the acceleration and moving direction of the input operation can be accurately detected.

Furthermore, according to the first embodiment, if authentication of the input fingerprint image is successful, the function retrieved from the encoded information/function correspondence table 120 is activated. With this, the function can be provided only to the authorized users.

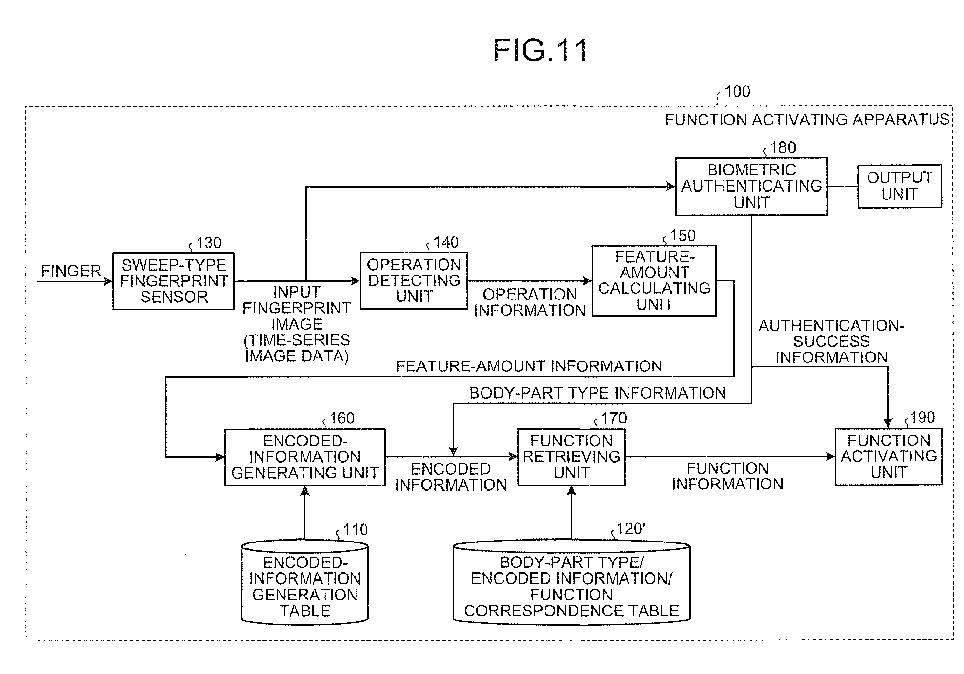

In the first embodiment, a search for a function to be activated according to an input of biometric information may be performed in consideration of an input body-part type. FIG. 11 illustrates the configuration of a function activating apparatus according to a second embodiment. The function activating apparatus of the second embodiment is different from that of the first embodiment in the following point.

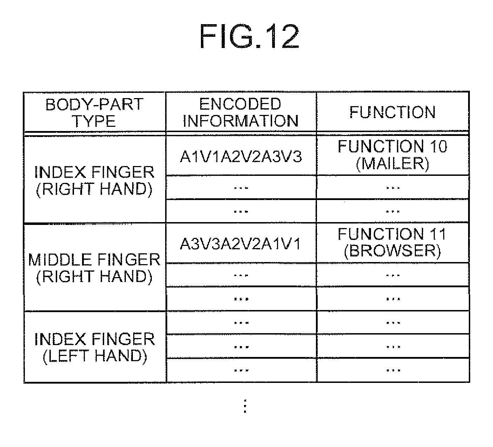

That is, as depicted in FIG. 11, the function activating apparatus of the second embodiment includes a body-part type/encoded information/function correspondence table 120', in place of the encoded information/function correspondence table 120. The body-part type/encoded information/function correspondence table 120' stores therein, as depicted in FIG. 12, correspondence among a body-part type, such as index finger (right hand), middle finger (right hand), or index finger (left hand), encoded information, and a function. FIG. 12 illustrates an example of the structure of the body-part type/encoded information/function correspondence table 120' according to the second embodiment.

If the input fingerprint image has been successfully authenticated, the biometric authenticating unit 180 outputs the body-part type of the finger for which authentication has been successful, such as index finger (right hand), middle finger (right hand), or index finger (left hand), to the function retrieving unit 170.

The function retrieving unit 170 then refers to the body-part type/encoded information/function correspondence table 120' to retrieve a function associated with the encoded information received from the encoded-information generating unit 160 and the body-part type received from the biometric authenticating unit 180. For example, if the function retrieving unit 170 has successfully retrieved a function 10 (mailer) associated with encoded information "A1V1A2V2A3V3" and a body-part type of "index finger (right hand)", the function retrieving unit 170 outputs the function 10 to the function activating unit 190.

Then, if the fingerprint image has been successfully authenticated by the biometric authenticating unit 180, the function activating unit 190 activates the function 10 received from the function retrieving unit 170 in a manner similar to that of the first embodiment.

As described above, according to the second embodiment, a search for a function to be activated according to an input of biometric information is performed in consideration of an input body-part type. Therefore, the number of functions to be activated according to an input of biometric information can be further expanded.

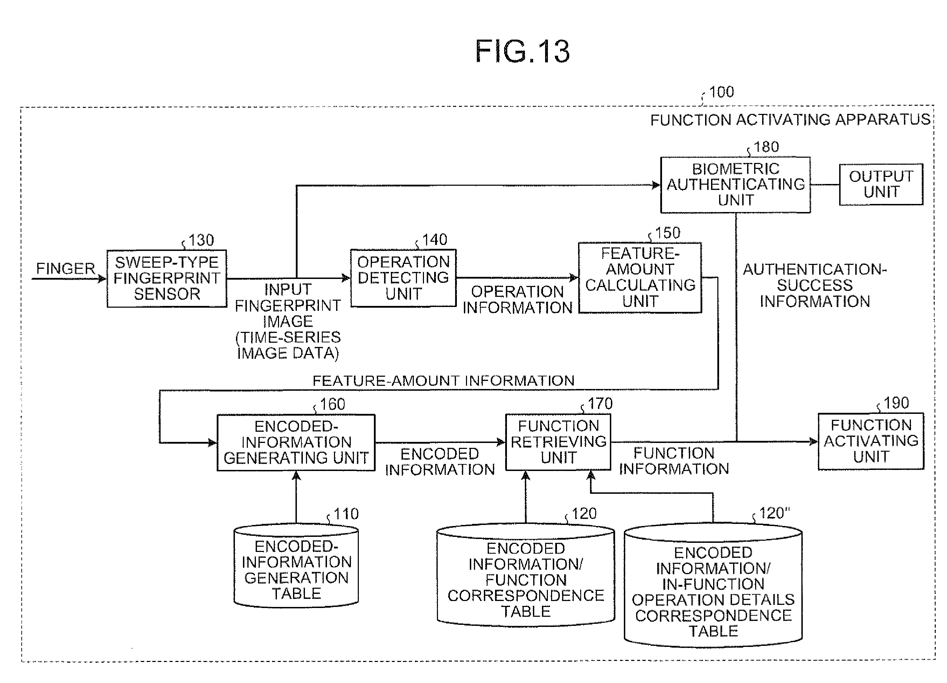

In the first embodiment, the operation in the function being activated may be performed according to an input of biometric information. FIG. 13 illustrates the configuration of a function activating apparatus according to a third embodiment. The function activating apparatus of the third embodiment is different from that of the first embodiment in the following point.

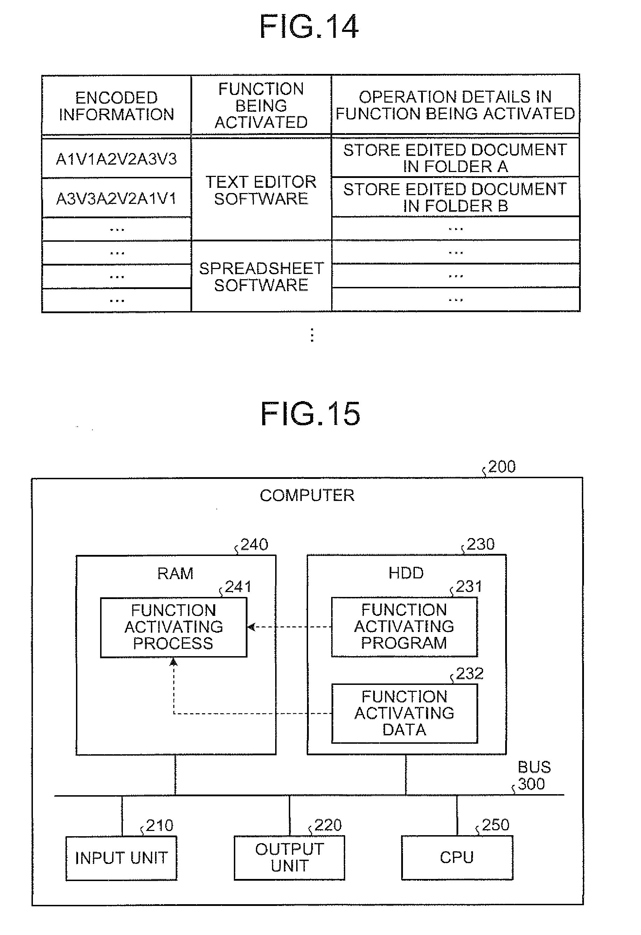

That is, as depicted in FIG. 13, the function activating apparatus of the third embodiment includes an encoded information/in-function operation details correspondence table 120'', in addition to the encoded information/function correspondence table 120. The encoded information/in-function operation details correspondence table 120'' stores therein, as depicted in FIG. 14, correspondence among encoded information (four example, "A1V1A2V2A3V3"), a function being activated (for example, "text editor software"), and operation details in the function being activated (for example, "store in a folder A"). FIG. 14 illustrates an example of the structure of the encoded information/in-function operation details correspondence table 120" according to the third embodiment.

It is assumed herein that the function retrieving unit 170 refers to the encoded information/function correspondence table 120 (FIG. 5), but fails to find a function associated with the encoded information (for example, "A1V1A2V2A3V3") received from the encoded-information generating unit 160. In this case, the function retrieving unit 170 then refers to the encoded information/in-function operation details correspondence table 120" to retrieve an operation detail in the function being activated associated with the encoded information (for example, "A1V1A2V2A3V3") and the function being activated (for example, "text editor software"). If a search for an operation detail in the function being activated (for example, "store in a folder A") has been successful, the function retrieving unit 170 outputs the retrieved operation detail in the function being activated to the function activating unit 190.

If the fingerprint image has been successfully authenticated by the biometric authenticating unit 180, the function activating unit 190 performs an operation detail in the function being activated received from the function retrieving unit 170 (for example, "store in a folder A").

An example of operation to be achieved by the third embodiment is briefly explained. For example, when the user performs a fingerprint input operation with the index finger of the right hand being accelerated while text editor software is being activated, instead of activating a new function according to this input operation, a predetermined operation in the function being activated is performed, such as "store an edited document in a folder A".

As described above, according to the third embodiment, not only a new function can be activated but also an operation in the function being activated can be performed according to an input of biometric information.

While, in the first to third embodiments, a fingerprint is used as biometric information, the biometric information is not limited to a fingerprint. Other information such as vein may also be used as the biometric information.

The constituent elements of the function activating apparatus 100 depicted in FIGS. 3, 11, and 13 are functionally conceptual, and need not be physically configured as illustrated. In other words, the specific mode of dispersion and integration of the constituent elements of the function activating apparatus 100 is not limited to the ones illustrated in the drawings, and the constituent elements, as a whole or in part, can be divided or integrated either functionally or physically based on various types of loads or use conditions. For example, the operation detecting unit 140, the feature-amount calculating unit 150, and the encoded-information generating unit 160 may be integrated into one unit. Further, all or arbitrary part of the process functions (for example, see FIG. 10) performed in the function activating apparatus 100 can be implemented by a central processing unit (CPU) and a program analyzed and executed by that CPU, or can be implemented as hardware with a wired logic.

Various processes (for example, see FIG. 10) of the function activating apparatus 100 described above can be implemented by executing a program provided in advance on a computer such as a personal computer or a work station. In the following, with reference to FIG. 15, a description is given of an example of such a computer that executes the program (hereinafter, "function activating program") for implementing the same functions as described in the above embodiments . FIG. 15 is a diagram of a computer 200 that executes the function activating program.

As depicted in FIG. 15, the computer 200 includes an input unit 210, an output unit 220, a hard disk drive (HDD) 230, a random access memory (RAM) 240, and a CPU 250, which are connected via a bus 300.

The input unit 210 receives an input of various data from a user. The output unit 220 outputs or displays various types of information. The HDD 230 stores therein information necessary for the CPU 250 to perform various processes. The RAM 240 temporarily stores therein various types of information. The CPU 250 performs various computing processes.

As depicted in FIG. 15, the HDD 230 stores in advance a function activating program 231 achieving the same function as the respective processing units of the function activating apparatus 100 in the above embodiments and function activating data 232. The function activating program 231 may be distributed as appropriate to be stored in a storage unit of another computer communicably connected via a network.

When the CPU 250 loads the function activating program 231 from the HDD 230 into the RAM 240, as depicted in FIG. 15, the function activating program 231 implements a function activating process 241. That is, in the function activating process 241, the function activating data 232 and others are loaded from the HDD 230 into an assigned area in the RAM 240 and, based on the data and others, various processes are performed. The function activating process 241 corresponds to the processes performed in the operation detecting unit 140, the feature-amount calculating unit 150, the encoded-information generating unit 160, the function retrieving unit 170, the biometric authenticating unit 180, and the function activating unit 190 of the function activating apparatus depicted in FIG. 3.

The function activating program 231 need not necessarily be stored in the HDD 230 from the beginning. For example, the function activating program 231 may be stored in a "portable physical medium" connectable to the computer 200, such as a flexible disk (FD), compact-disk read only memory (CD-ROM), digital versatile disk (DVD), magneto-optical disk, or integrated circuit (IC) card. The function activating program 231 may also be stored in "another computer (or server)" connected to the computer 200 via a public line, the Internet, a local area network (LAN), or a wide area network (WAN), and be read therefrom by the computer 200 for execution.

The following function activating method is achieved by the function activating apparatus 100 explained in the first embodiment.

That is, the method includes an operation detecting step (see Step S6 in FIG. 10) of detecting, in time-series image data input according to a biometric-information input operation, either one or both of a moving direction and acceleration of an input operation at the time of the biometric-information input operation. The method further includes a feature-amount calculating step (see Step S7 in FIG. 10) of calculating a feature amount of either one or both of the moving direction and acceleration detected at the operation detecting step. The method further includes an encoded-information generating step (see Step S8 in FIG. 10) of generating encoded information by assigning a predetermined code to the feature amount calculated at the feature-amount calculating step. The method further includes a function searching step (see Steps S9 and S10 in FIG. 10) of searching a correspondence storage unit for the function associated with the encoded information generated at the encoded-information generating step, the correspondence storage unit having stored therein a correspondence between the encoded information and a function to be activated according to an input of the biometric information, the encoded information being obtained by encoding the feature amount of the input operation at the time of the biometric-information input operation. The method further includes a function activating step (see Step S12 in FIG. 10) of activating the function retrieved at the function searching step. The function activating method including these steps is achieved.

According to the embodiments, in a sweep-type fingerprint sensor, the number of functions to be activated in association with input biometric information can be expanded, while the authentication performance is kept.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A function activating apparatus comprising:
a correspondence storage unit that stores therein a correspondence between encoded information and a function to be activated in response to input of biometric information formed of time-series image data, the encoded information being obtained by encoding a feature amount of at least one of a moving direction and acceleration of input operation of biometric information;
an operation detecting unit (140) that detects, from the time-series image data input with the input operation of the biometric information, at least one of the moving direction and acceleration of the input operation of the biometric information;
a feature-amount calculating unit (150) that calculates the feature amount of at least one of the moving direction and acceleration detected by the operation detecting unit (140);
an encoded-information generating unit (160) that assigns a predetermined code to the feature amount calculated by the feature-amount calculating unit (150) to generate the encoded information;
a function retrieving unit (170) that retrieves from the correspondence storage unit a function associated with the encoded information generated by the encoded-information generating unit (160); and
a function activating unit (190) that activates the function retrieved by the function retrieving unit (170).

2. The function activating apparatus according to claim 1, wherein the operation detecting unit (140) detects at least one of the moving direction and acceleration of the input operation from the time-series image data superposed at a position where a correlation value between pieces of the time-series image data forming the biometric information is highest.

3. The function activating apparatus according to claim 1 or 2, further comprising a biometric-information authenticating unit (180) that authenticates the biometric information formed of the time-series image data input with the input operation of the biometric information, wherein
when the biometric information is authenticated by the biometric-information authenticating unit (180), the function activating unit (190) activates the function retrieved by the function retrieving unit (170).

4. The function activating apparatus according to claim 3, wherein
the correspondence storage unit stores therein a correspondence among the encoded information, the function, and a body-part type corresponding to the biometric information input with the input operation of the biometric information, and
the function retrieving unit (170) retrieves from the correspondence storage unit a function associated with the encoded information and the body-part type corresponding to the biometric information authenticated by the biometric-information authenticating unit (180).

5. The function activating apparatus according to claim 1, further comprising an in-function operation storage unit that stores therein a correspondence between operation that is performed in each function being activated and the encoded information, wherein
the function retrieving unit (170) retrieves from the in-function operation storage unit the operation associated with the encoded information, and
the function activating unit (190) performs the operation retrieved by the function retrieving unit (170).

6. A function activating method comprising:
detecting, from time-series image data input with input operation of biometric information, at least one of a moving direction and acceleration of the input operation of the biometric-information;
calculating a feature amount of at least one of the moving direction and acceleration detected at the detecting;
generating encoded information by assigning a predetermined code to the feature amount calculated at the calculating;
retrieving a function associated with the encoded information generated at the generating from a correspondence storage unit that stores therein a correspondence between encoded information and a function to be activated in response to input of biometric information formed of time-series image data, the encoded information being obtained by encoding a feature amount of at least one of a moving direction and acceleration of input operation of biometric information; and
activating the function retrieved at the retrieving.
